(19)

**Europäisches Patentamt**
**European Patent Office**
**Office européen des brevets**

(11) **EP 4 746 327 A1**

(12) **EUROPEAN PATENT APPLICATION**
published in accordance with Art. 153(4) EPC

(43) Date of publication:
**20.05.2026 Bulletin 2026/21**

(21) Application number: **23944712.1**

(22) Date of filing: **12.07.2023**

(51) International Patent Classification (IPC):
***H04L 5/00*** *(2006.01)*

(52) Cooperative Patent Classification (CPC):
**H04L 5/00**

(86) International application number:
**PCT/CN2023/107096**

(87) International publication number:
**WO 2025/010692 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WU, Danyang**
  **Dongguan, Guangdong 523860 (CN)**
• **XU, Jing**
  **Dongguan, Guangdong 523860 (CN)**
• **LIN, Yanan**
  **Dongguan, Guangdong 523860 (CN)**

(74) Representative: **Novagraaf Technologies
2 rue Sarah Bernhardt
CS90017
92665 Asnières-sur-Seine Cedex (FR)**

(54) **SENSING INFORMATION SENDING METHOD AND APPARATUS, SENSING INFORMATION RECEIVING METHOD AND APPARATUS, DEVICE, AND STORAGE MEDIUM**

(57)    A sensing information sending method and apparatus, a sensing information receiving method and apparatus, a device, and a storage medium, relating to the technical field of communications. The sensing information sending method comprises: a first node sends sensing information, the sensing information being obtained on the basis of a sensing signal which satisfies a quality requirement (410). By constraining a quality requirement of a sensing signal, a sensing node sends sensing information obtained on the basis of a sensing signal which satisfies a quality requirement, and does not process and feed back a sensing signal which does not satisfy a quality requirement. On the one hand, by constraining a quality requirement of a sensing signal, the accuracy and effectiveness of the sensing information which is fed back can be improved; and on the other hand, a sensing signal which does not satisfy a quality requirement does not need to be processed and fed back, so that the processing complexity and energy consumption of the sensing node can be reduced, the feedback amount can be reduced, the transmission resources are saved, and the transmission efficiency of the sensing information is improved.

410

Transmitting, by a first node, sensing information, wherein the sensing information is acquired based on a sensing signal that satisfies a quality requirement

**FIG. 4**

EP 4 746 327 A1

# Description

## TECHNICAL FIELD

Embodiments of the present disclosure relate to the field of communication technologies, and in particular, to a method and apparatus for transmitting sensing information, a method and apparatus for receiving sensing information, and a device and a storage medium thereof.

## RELATED ART

Integrated sensing and communication means that functions of communication and sensing are integrated, such that a future communication system has the functions of communication and sensing.

In a sensing system, a sensing node (such as a receiver node of a sensing signal) receives a sensing signal, acquires sensing information based on the sensing signal, and feeds back the sensing information to a node for processing the sensing information in the sensing system.

Due to the complex and variable spatial propagation environment in which the sensing signal is located, the quality of the sensing signal received by the sensing node varies. In a case where the sensing information acquired based on a low-quality sensing signal is fed back, the accuracy and validity of the fed-back sensing information is not ensured.

## SUMMARY

Embodiments of the present disclosure provide a method and apparatus for transmitting sensing information, a method and apparatus for receiving sensing information, and a device and a storage medium thereof. The technical solutions are as follows:

According to some embodiments of the present disclosure, a method for transmitting sensing information is provided. The method is performed by a first node. The method includes:

transmitting sensing information, wherein the sensing information is acquired based on a sensing signal that satisfies a quality requirement.

According to some embodiments of the present disclosure, a method for receiving sensing information is provided. The method is performed by a second node. The method includes:

receiving sensing information, wherein the sensing information is acquired based on a sensing signal that satisfies a quality requirement.

According to some embodiments of the present disclosure, an apparatus for transmitting sensing information is provided. The apparatus includes:

a transmitting module, configured to transmit sensing information, wherein the sensing information is acquired based on a sensing signal that satisfies a quality requirement.

According to some embodiments of the present disclosure, an apparatus for receiving sensing information is provided. The apparatus includes:

a receiving module, configured to receive sensing information, wherein the sensing information is acquired based on a sensing signal that satisfies a quality requirement.

According to some embodiments of the present disclosure, a device is provided. The device includes a processor and a memory storing one or more computer programs therein, wherein the processor is configured to load and run the one or more computer programs cause the device to perform the method for transmitting sensing information or the method for receiving sensing information described above.

According to some embodiments of the present disclosure, a computer-readable storage medium is provided. The computer-readable storage medium stores one or more computer programs therein, wherein the one or more computer programs, when loaded and run by a processor, cause the processor to perform the method for transmitting sensing information or the method for receiving sensing information described above.

According to some embodiments of the present disclosure, a chip is provided. The chip includes programmable logic circuitry and/or one or more program instructions, wherein the chip, when running the one or more programmable logic circuits and/or the one or more program instructions, is configured to perform the method for transmitting sensing information or the method for receiving sensing information described above.

According to some embodiments of the present disclosure, a computer program product is provided. The computer program product includes one or more computer programs stored in a computer-readable storage medium, wherein the one or more computer programs, when read from the computer-readable storage medium, and loaded and run by a processor, cause the processor to perform the method for transmitting sensing information or the method for receiving sensing information described above.

The technical solutions according to the embodiments of the present disclosure achieve the following beneficial effects.

The quality requirement of the sensing signal is constrained, such that the sensing node transmits the sensing information acquired based on the sensing signal that satisfies the quality requirement, and does not process and feed back a sensing signal that does not satisfy the quality requirement. In one aspect, the accuracy and validity of the fed-back sensing information is improved by constraining the quality requirement of the sensing signal. In another aspect, the sensing signal that does not satisfy the quality requirement is not processed and fed back, such that the processing complexity and energy consumption of the sensing node are reduced, the feedback amount is reduced, transmission resources are saved, and the transmission efficiency of the sensing information is improved.

## BRIEF DESCRIPTION OF THE DRAWINGS

FIG. 1 is a schematic diagram of a network architecture according to some embodiments of the present disclosure;

FIG. 2 is a schematic diagram illustrating eight sensing modes according to some embodiments of the present disclosure;

FIG. 3 is a schematic diagram of a sensing system including a plurality of sensing nodes according to some embodiments of the present disclosure;

FIG. 4 is a flowchart of a method for transmitting sensing information according to some embodiments of the present disclosure;

FIG. 5 is a schematic diagram of a statistical result of distribution of line-of-sight (LOS) probabilities with distances in different scenarios according to some embodiments of the present disclosure;

FIG. 6 is a flowchart of a method for receiving sensing information according to some embodiments of the present disclosure;

FIG. 7 is a block diagram of an apparatus for transmitting sensing information according to some embodiments of the present disclosure;

FIG. 8 is a block diagram of an apparatus for receiving sensing information according to some embodiments of the present disclosure; and

FIG. 9 is a schematic structural diagram of a device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and business scenarios described in the embodiments of the present disclosure are intended to describe the technical solutions according to the embodiments of the present disclosure more clearly, but do not constitute a limitation on the technical solutions according to the embodiments of the present disclosure. Those of ordinary skill in the art learn that, with the evolution of the network architecture and the emergence of new business scenarios, the technical solutions according to the embodiments of the present disclosure are also applicable to similar technical problems.

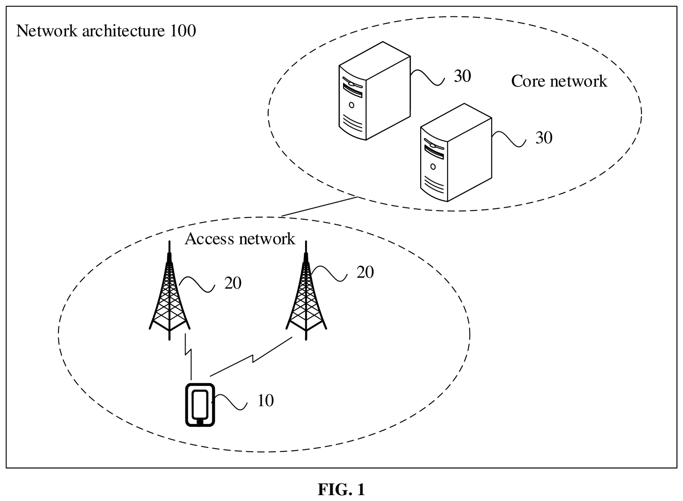

FIG. 1 illustrates a schematic diagram of a network architecture 100 according to some embodiments of the present disclosure. The network architecture 100 may include: a terminal device 10, an access network device 20, and a core network element 30.

The terminal device 10 may refer to a user equipment (UE), an access terminal, a subscriber unit, a subscriber station, a rover station, a mobile station, a remote station, a remote terminal, a mobile device, a wireless communication device, a user agent, or a user apparatus. In some embodiments, the terminal device 10 is also a cellular phone, a cordless phone, a session initiation protocol (SIP) phone, a wireless local loop (WLL) station, personal digital assistant (PDA), a handheld device with the wireless communication function, a computing device or another processing device connected to a wireless modem, an in-vehicle device, a wearable device, a terminal device in a 5th generation system (5GS), or a terminal device in a public land mobile network (PLMN) evolved in the future, or the like, which is not limited in the embodiments of the present disclosure. For convenience of description, the devices described above are collectively referred to as the terminal device. A plurality of terminal devices 10 are usually deployed, and one or more terminal devices 10 may be distributed in a cell managed by each access network device 20. The terminal device may also be referred to as a terminal or UE, and those skilled in the art can understand the meaning thereof.

The access network device 20 is a device deployed in an access network to provide a wireless communication function for the terminal device 10. The access network device 20 may include various forms of macro base stations, micro base stations, relay stations, access points, and the like. In systems using different radio access technologies, a device with the function of the access network device may have different names. For example, the device is referred to as gNodeB or gNB in the 5G NR system. As communication technologies evolve, the name "access network device" may change. For convenience of description, in the embodiments of the present disclosure, the above apparatuses for providing the terminal devices 10 with the wireless communication function are collectively referred to as access network device. In some embodiments, a communication relationship is established between the terminal device 10 and the core network element 30 through the access network device 20. Exemplarily, in a long-term evolution (LTE) system, the access network device 20 is an evolved universal terrestrial radio access network (EUTRAN) or one or more eNodeBs in EUTRAN; in a 5G NR system, the access network device 20 is a radio access network (RAN) or one or more gNBs in the RAN. In the embodiments of the present disclosure, unless specifically stated otherwise, the "network device" refers to the access network device 20, such as a base station.

The core network element 30 is a network element deployed in a core network, and the core network element 30 mainly functions as user connections, user management, service bearing, and provide an interface to an external network as a bearer network. For example, the core network element in the 5G NR system may include an access and mobility management function (AMF) entity, a user plane function (UPF) entity, a session management function (SMF) entity, and the like.

In some embodiments, the access network device 20 and the core network element 30 communicate with each other through an air interface technology, such as an NG interface in a 5G NR system. The access network device 20 and the terminal device 10 communicate with each other through an air interface technology, such as a Uu interface.

The "5G NR system" in the embodiments of the present disclosure may also be referred to as a 5G system or an NR system, but those skilled in the art can understand the meaning thereof. The technical solutions according to the embodiments of the present disclosure are applicable to an LTE system, a 5G NR system, a subsequent evolution system of the 5G NR system (e.g., a 6th generation system (6G system)), or other communication systems such as a narrow band internet of things (NB-IoT) system, which is not limited in the present disclosure.

In the embodiments of the present disclosure, a network device provides services for a cell, and the terminal device communicates with the network device through a transmission resource (e.g., a frequency-domain resource or a spectrum resource) on a carrier used by the cell. The cell is a cell corresponding to the network device (e.g., a base station), and the cell belongs to a macro base station or a base station corresponding to a small cell. The small cell includes: metro cells, micro cells, pico cells, femto cells, and the like, and the small cells have the characteristics of small coverage area and low transmission power, and are suitable for providing high-rate data transmission services.

Integrated sensing and communication means that two functions of communication and sensing are integrated, such that a future communication system has the functions of communication and sensing. In the case where information is transmitted over a wireless channel, a channel characteristic is actively recognized and analyzed to sense a physical feature of a surrounding environment, such that the communication function and the sensing function are mutually enhanced. For example, information of the surrounding environmental is sensed using a signal of the base station, and a communication link is designed, such that some obstacles are avoided, and communication performance is improved.

A next-generation network (for example, a 6G network) is expected to be a combination of a mobile communication network, a sensing network, and a computing power network. The sensing network in a narrow sense refers to a system with capabilities such as target positioning (ranging, speed measurement, and angle measurement), target imaging, target detection, target tracking, and target recognition. The sensing network in a broad sense refers to a system with attributes and states of all services, networks, users and terminals, and environmental objects. For sensing applications, sensing may include the following classifications:

outdoor, wide-area, or local-area applications: the outdoor, wide-area, or local-area applications include smart cities (for example, weather monitoring), smart transportation/high-speed railways (for example, high-precision map construction, road supervision, and intrusion detection), low-altitude applications (for example, drone monitoring and obstacle avoidance, flight intrusion detection, and flight path management), and the like; and

indoor or local-area applications: the indoor or local-area applications include smart home and health management (for example, respiration monitoring, intrusion detection, gesture/posture recognition, motion monitoring, and movement trajectory tracking), smart factory (for example, intrusion detection, material detection, and article defect detection), and the like.

Above description is only exemplary, and provides some classifications of sensing applications. The application range of sensing is not limited to the above examples.

Wireless communication and sensing are two important applications of modern radio frequency technologies. Sensing uses radio waves to detect parameters of a physical environment, so as to achieve environment sensing such as target positioning, action recognition, and imaging. Traditional sensing and wireless communication exist independently, and there is a waste of wireless spectrum and hardware resources in the separation design. Entering the era of beyond 5G (B5G) and 6G, the communication spectrum has stepped into millimeter wave, terahertz, and visible light communication, and the spectrum of future wireless communication will coincide with the traditional sensing spectrum. In the integrated sensing and communication technology, two functions of wireless communication and sensing are integrated, and a sensing function may be achieved using a wireless resource of the wireless communication; a sensing service in a larger area may be achieved using a widely deployed cellular network; joint sensing may be performed using a base station and a plurality of terminals to achieve higher sensing precision; the sensing function may be achieved by reusing a hardware module of the wireless communication, thereby reducing costs. In summary, the integrated sensing and communication technology enables a future wireless communication system to feature a sensing capability, and provides a basis for future development of services such as smart transportation, a smart city, a smart factory, and a drone.

The term "sensing" mentioned in the embodiments of the present disclosure refers to a process of directly or indirectly acquiring sensing information of a target or an environment based on at least one sensing signal such as a sound wave, an electromagnetic wave, or a light wave (including but not limited to a laser). For example, a sensing signal is transmitted and received, and the sensing signal is measured or processed in another manner to acquire the sensing information of a sensing target or an environment, for example, achieving services such as positioning, ranging, speed measurement, angle measurement, target imaging, target detection, target tracking, and target recognition.

In addition, the term "sensing" mentioned in the embodiments of the present disclosure may alternatively be replaced with any other word that can represent a sensing-related meaning, for example, positioning, ranging, speed measurement, angle measurement, target imaging, target detection, target tracking, and target recognition.

The nodes participating in sensing are as follows:

a sensing transmitter node: a transmitter node of a sensing signal;
a sensing receiver node: a receiver node of a sensing signal;
a sensing node: a general term of the sensing transmitter node and the sensing receiver node, i.e., a node that performs sensing;
a sensing manager node: a node that manages and controls a sensing task, wherein the sensing manager node configures a sensing task for the sensing node, and the sensing node feeds back a sensing result to the sensing manager node upon performing the sensing; and
a sensing trigger node: a node that initiates sensing, sets a configuration of a sensing scenario, and parses sensing feedback transmitted by a sensing node.

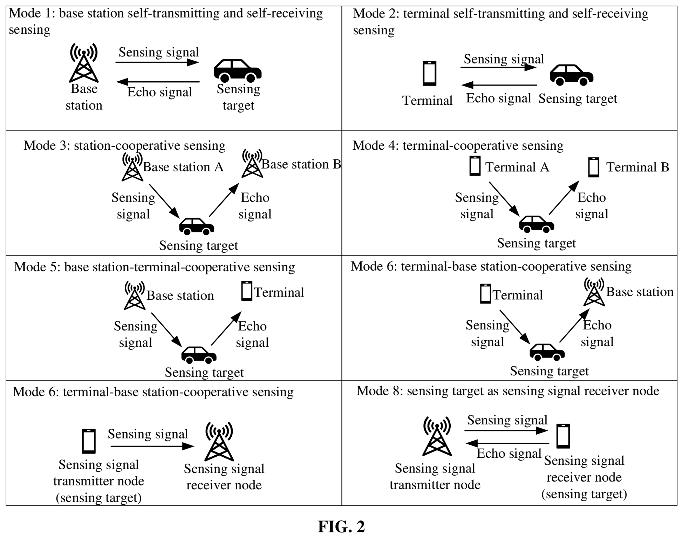

The sensing may be achieved via eight modes as illustrated in FIG. 2.

Mode 1, base station self-transmitting and self-receiving sensing: a base station transmits a sensing signal and receives an echo signal. In mode 1, the sensing transmitter node and the sensing receiver node are the same base station. That is, the base station transmits a sensing signal to a sensing target; and the sensing signal is reflected by the sensing target, and then an echo signal (i.e., the sensing signal reflected by the sensing target) is received by the same base station.

Mode 2, terminal self-transmitting and self-receiving sensing: a terminal transmits a sensing signal and receives an echo signal. In mode 2, the sensing transmitter node and the sensing receiver node are the same terminal. That is, the terminal transmits a sensing signal to a sensing target; and the sensing signal is reflected by the sensing target, and then an echo signal is received by the same terminal.

Mode 3, station-cooperative sensing: a base station (for example, base station A in the figure) transmits a sensing signal, and another base station (for example, base station B in the figure) receives an echo signal. In mode 3, the sensing transmitter node and the sensing receiver node are different base stations. That is, a base station transmits a sensing signal to a sensing target; and the sensing signal is reflected by the sensing target, and then an echo signal is received by another base station.

Mode 4, terminal-cooperative sensing: a terminal (for example, terminal A in the figure) transmits a sensing signal, and another terminal (for example, terminal B in the figure) receives an echo signal. In mode 4, the sensing transmitter node and the sensing receiver node are different terminals. That is, a terminal transmits a sensing signal to a sensing target; and the sensing signal is reflected by the sensing target, and then an echo signal is received by another terminal.

Mode 5, base station-terminal-cooperative sensing: a base station transmits a sensing signal, and a terminal receives an echo signal. In mode 5, the sensing transmitter node is a base station, and the sensing receiver node is a terminal. That is, the base station transmits a sensing signal to a sensing target; and the sensing signal is reflected by the sensing target, and then an echo signal is received by the terminal.

Mode 6, terminal-base station-cooperative sensing: a terminal transmits a sensing signal, and the base station receives an echo signal. In mode 6, the sensing transmitter node is a terminal, and the sensing receiver node is a base station. That is, the terminal transmits a sensing signal to a sensing target; and the sensing signal is reflected by the sensing target, and then an echo signal is received by the base station.

Mode 7: the sensing target is a sensing signal transmitter node. In mode 7, the sensing transmitter node is a terminal, and the sensing receiver node is a base station. Since the sensing target (the terminal) is a sensing transmitter node, the sensing signal is transmitted by the sensing transmitter node (terminal) to the sensing receiver node (the base station) and does not need to be reflected, and then the base station receives the signal and directly parses the sensing result.

Mode 8: the sensing target is a sensing signal receiver node. In mode 8, the sensing transmitter node is a base station, and the sensing receiver node is a terminal. Since the sensing target (the terminal) is a sensing receiver node, the terminal needs to feed back the sensing result to the base station upon receiving the sensing signal, such that the base station learns the sensing result.

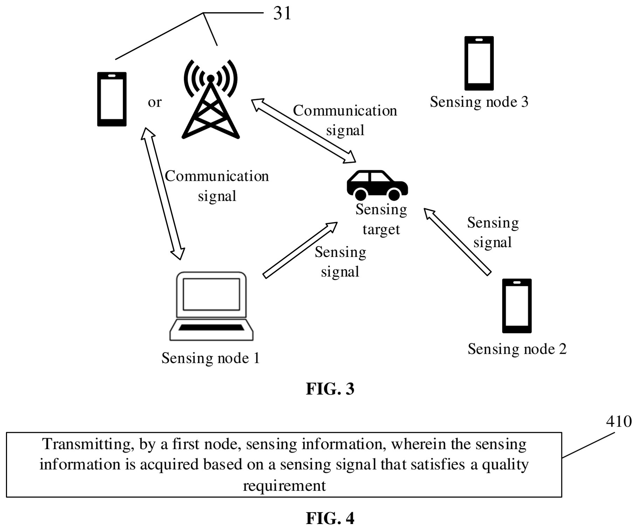

The transmitter node for the sensing signal and the receiver node for the sensing signal may be collectively referred to as the sensing node. In the eight sensing modes, a single sensing node or a pair of sensing nodes is present. However, in a wireless communication system, a large number of terminal devices (such as mobile phones or IoT devices) are present. In the case where there are a plurality of sensing nodes (i.e., base stations, mobile phones, IoT devices, or the like that can transmit and/or receive sensing signals) around a sensing object, joint sensing of the plurality of sensing nodes may improve the accuracy of sensing, satisfy more complex sensing service requirements, and provide more diverse sensing services. As illustrated in FIG. 3, in the case where a plurality of sensing nodes (for example, a sensing node 1, a sensing node 2, and a sensing node 3 in FIG. 3) are present in the system, a sensing controller node 31 may be present to control and manage the entire sensing service to improve the efficiency. The sensing controller node 31 may be a base station, a terminal device, or a core network element.

FIG. 4 illustrates a flowchart of a method for transmitting sensing information according to some embodiments of the present disclosure. The method includes the S410.

In S410, a first node transmits sensing information, wherein the sensing information is acquired based on a sensing signal that satisfies a quality requirement.

In some embodiments, the first node is a sensing node in the sensing system, and is configured to transmit and/or receive a sensing signal. In some embodiments, the first node is an access network device (for example, a base station) or a terminal device. In the embodiments of the present disclosure, a specific device that implements the first node is not limited. Exemplarily, for the sensing system illustrated in FIG. 3, the first node is a sensing node.

In some embodiments, the first node acquires the sensing information based on the sensing signal. In some embodiments, the first node receives the sensing signal, acquires the sensing information based on the received sensing signal, and then transmits the sensing information. The term "sensing information" in the present disclosure may also be referred to as a sensing result, a measurement result, a feedback result, a sensing feedback quantity, or sensing feedback information, which is not limited in the present disclosure. In addition, the term "transmitting sensing information" in the present disclosure may also be referred to as feeding back sensing information, and the two expression have the same meaning.

In some embodiments, the first node transmits the sensing information to a second node. The second node may be a node in the sensing system for collecting and/or processing the sensing information. In some embodiments, the second node is any one of: an access network device (for example, a base station), a terminal device, a server, a core network element, a sensing information collector, or the like. In the embodiments of the present disclosure, a specific device that implements the second node is not limited. Exemplarily, for the sensing system shown in FIG. 3, the second node is a sensing controller node.

The method according to the embodiments of the present disclosure is applicable to any sensing mode, including but not limited to any one of the eight sensing modes illustrated in FIG. 2. For the self-transmitting and self-receiving sensing mode, such as modes 1 and 2, the transmitter node and the receiver node for the sensing signal are the same node. For the non-self-transmitting and self-receiving sensing mode, such as modes 3 to 8, the transmitter node and the receiver node for the sensing signal are different nodes.

For the sensing signals received by the first node, all the sensing signals satisfy the quality requirement; or part of the sensing signals satisfy the quality requirement and another part of sensing signals do not satisfy the quality requirement; or none of the sensing signals satisfy the quality requirement. In the embodiments of the present disclosure, the first node evaluates whether the sensing signal satisfies the quality requirement, and the first node processes the sensing signal that satisfies the quality requirement to acquire sensing information and feeds back the sensing information. In other words, the first node may neither process or feed back a sensing signal that does not satisfy the quality requirement, such that the processing complexity and energy consumption of the sensing node are reduced, the feedback quantity is reduced, the transmission resources are saved, and the transmission efficiency of the sensing information is improved.

In some embodiments, the quality requirement is determined based on at least one of: the received quality of the sensing signal, the received energy of the sensing signal, or the LOS probability of the sensing signal.

For example, the quality requirement is a requirement for the received quality of the sensing signal. For example, the quality requirement is a requirement for the received energy of the sensing signal. For example, the quality requirement is a requirement for the LOS probability of the sensing signal. For example, the quality requirement is a requirement for the received quality and the received energy of the sensing signal. For example, the quality requirement is a requirement for the received quality and the LOS probability of the sensing signal. For example, the quality requirement is a requirement for the received energy and the received energy of the sensing signal. For example, the quality requirement is a requirement for the received quality, the received energy, and the LOS probability of the sensing signal. In addition, the present disclosure includes, but is not limited to, the information of the sensing signal, and may further include other information.

In some embodiments, a corresponding value range or threshold condition is specified for at least one of the information to define the requirement for the information. For example, the requirement for the received quality is that the received quality belongs to a value range, or the received quality is greater than or equal to a threshold. For example, the requirement for the received energy is that the received energy belongs to a value range, or the received energy is greater than or equal to a threshold. For example, the requirement for the LOS probability is that the LOS probability belongs to a value range, or the LOS probability is greater than or equal to a threshold.

In some embodiments, the received quality includes at least one of: a signal to noise ratio (SNR), a signal to interference plus noise ratio (SINR), a reference signal receiving quality (RSRQ), a peak to average power ratio (PAPR), or a cubic metric (CM).

For example, a wireless sensing accuracy in the sensing system refers to proximity between the measured target distance, speed, and angle and true values thereof, which is generally described by a root mean square error. The accuracy depends on the wireless sensing waveform and the antenna parameters, and further depends on the SNR of the echo signal. The sensing controller node (for example, the second node) configures a corresponding received signal quality threshold to satisfy the requirement of the sensing service for the accuracy of the sensing information. For example, the quality requirement includes a case where SNR > 3 dB. The possible corresponding relationships are as follows.

The distance measurement precision is expressed as: $\sigma_R = \dfrac{\Delta R}{\sqrt{\frac{2E}{N_0}}} = \dfrac{c}{2B\sqrt{2SNR}}$;

the speed measurement precision is expressed as:
$\sigma_v = \dfrac{\lambda}{2}\Delta f_d = \dfrac{\lambda}{2\tau\sqrt{\frac{2E}{N_0}}} = \dfrac{\lambda}{2\tau\sqrt{2SNR}}$;

the angle measurement precision is expressed as:
$\sigma_\theta = \dfrac{\theta_{3dB}}{1.6\sqrt{\frac{2E}{N_0}}} = \dfrac{\theta_{3dB}}{1.6\sqrt{2SNR}}$,

E represents the energy of the signal, $N_0$ represents the noise power per unit bandwidth, c represents the speed of light, $SNR = E/N_0$, $\tau = MT_r$ represents the signal duration (a non-compressed pulse width), $\Delta R$ represents the resolution of the distance, $B$ represents the bandwidth, $\lambda$ represents the wavelength, $\Delta f_d$ represents the resolution of the speed, and $\theta_{3dB}$ represents the resolution of the angle.

In some embodiments, the received energy includes at least one of: an energy of the signal, a reference signal receiving power (RSRP), or a received signal strength indicator (RSSI).

For example, due to complex and severe interference on long-distance spatial propagation, the RSRP and the distance within a range basically conform to a propagation path loss formula. The sensing controller node (for example, the second node) configures a quality requirement, and the quality requirement includes a threshold corresponding to the RSRP. A received signal that satisfies the threshold may accurately reflect a deviation of a metric of a transmitted signal from a metric of a received signal, and positioning calculation is further performed based on corresponding data.

In addition, the LOS probability is referred to as a probability of the LOS. The LOS probability refers to a probability that the LOS path (i.e., the direct path) is present in the spatial environment, that is, a probability that the echo signal of the sensing signal is the LOS path.

For example, in an indoor positioning process, a complex building structure hinders LOS path transmission, and the reflection, diffraction, and scattering of the signal increase the arrival time, change the arrival angle, and may cause a great positioning error. The sensing controller node (for example, the second node) may configure a quality requirement for the LOS probability based on the positioning precision requirement of the sensing service.

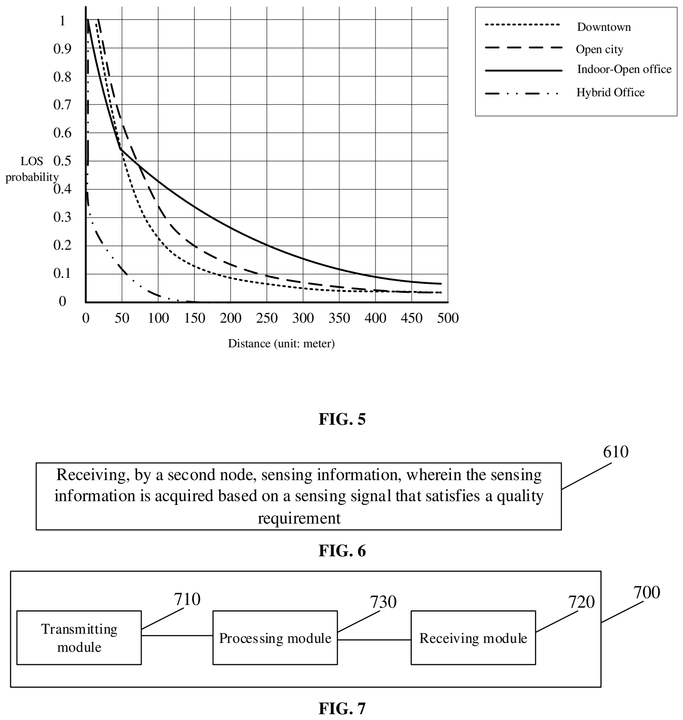

As illustrated in FIG. 5, in an indoor-open office scenario, the LOS probability that a distance is within 10 m is 90%. In the case where the LOS probability is greater than 90%, the positioning precision requirement of the sensing service is satisfied, and the sensing controller node configures the quality requirement for the LOS probability accordingly.

In some embodiments, the quality requirement includes requirements for one or more quality metrics. The quality metrics may be different metrics in the categories of the received quality, the received energy, and the LOS probability, and may be different metrics in the subcategories of the SNR, the SINR, the RSRQ, the PAPR, the CM, the energy of the signal, the RSRP, the RSSI, and the LOS probability.

In some embodiments, a requirement for any quality metric is represented by one or more value ranges. The value range may be a value range between two threshold values, for example, a range from a value greater than the first threshold value and a value less than the second threshold value. The value range may be greater than or less than a threshold value, or a set of one or more values. For example, for the energy of the sensing signal, the energy requirement may be that the energy belongs to a value range of [A, B], or the energy is a value range greater than or equal to C, or the energy belongs to a set of {X, Y}. A, B, C, X, and Y all represent numerical values of energy.

In some embodiments, in the case where the quality requirements include requirements for a plurality of quality metrics, the requirement for each of the plurality of quality metrics is constrained individually. That is, setting of a requirement for a quality metric is not affected by setting of a requirement for another quality metric. For example, setting of the requirement for the received quality is not affected by setting of the requirement for other quality metrics such as the received energy and the LOS probability. For example, setting of the requirement for the RSRQ is not affected by setting of the requirement for other quality metrics such as the energy of the signal and the LOS probability.

In some embodiments, in the case where the quality requirements include requirements for a plurality of quality metrics, the requirements for at least two of the plurality of quality metrics are jointly constrained. That is, setting of the requirement for a quality metric is affected by setting of the requirement for at least one other quality metric. For example, the requirements for the energy of the signal and the SINR are jointly constrained. The joint constraint relationship may be protocol-specified without a configuration process; or may be acquired through configuration, for example, configured by configuring the parameter AssociatedPowerAndSINR bool(0,1).

In some cases, in the case where two or more quality metrics satisfy a corresponding requirement, the accuracy of the sensing information is further ensured. For example, in the case where the energy of the received signal is used for positioning, a loss of a propagation path of the sensing signal may be affected by a non-line-of-sight (NLOS) link. In the case where accurate modeling is not performed, a difference between the measured value and the true value is large. In this case, the accuracy of the fed-back sensing information is improved by jointly constraining the energy of the received signal and the LOS probability. AssociatedRSRPAndLoS bool(0,1) is configured in the configuration information, and a specific threshold is further given. For example, in above scenario, only the energy of the received signal and the LOS probability are constrained, it is still difficult to distinguish a useful signal in the case where the SINR is low, , and accurate sensing information cannot be further acquired. Therefore, the three quality metrics need to be jointly constrained.

In some embodiments, the quality requirement and/or the joint constraint relationship are individually configured for different objects. That is, the quality requirement and/or the above joint constraint relationship are separately and independently configured for different objects. The objects include any one or a combination of more of: a sensing service, a sensing task, a sensing target, or a sensing node. For example, the quality requirement and/or the above joint constraint relationship are separately and independently configured for different sensing services. For example, the quality requirement and/or the above joint constraint relationship are separately and independently configured for different sensing targets. For example, the object is a combination of a sensing service and a sensing target. For example, the target includes the following combinations: (1) sensing service 1 and sensing target 1, (2) sensing service 1 and sensing target 2, (3) sensing service 2 and sensing target 1, and (4) sensing service 2 and sensing target 2. The quality requirement and/or the above joint constraint relationship are separately and independently configured for the four different combinations. Using an example of the quality requirement, corresponding quality requirements are respectively configured for the four different combinations. For example, the quality requirement configured for the combination (1) and the quality requirement configured for the combination (2) may be the same or different. Based on the method, the flexibility of configuring the quality requirement and/or the joint constraint relationship is improved.

In some embodiments, the first node receives the sensing signal and processes the sensing signal that satisfies the quality requirement to acquire sensing information. Then, the first node transmits the acquired sensing information. In some embodiments, for a self-transmitting and self-receiving sensing scenario, the first node further transmits a sensing signal, and the sensing signal received by the first node is an echo signal of the sensing signal transmitted by the first node. In some embodiments, for a non-self-transmitting and self-receiving sensing scenario, the first node does not need to transmit a sensing signal, and the sensing signal received by the first node is an echo signal of a sensing signal transmitted by another sending node.

In some embodiments, the first node neither processes or feeds back the sensing signal that does not satisfy the quality requirement. For example, for the sensing signal that does not satisfy the quality requirement, the first node does not need to process the part of the sensing signal to acquire corresponding sensing information, and accordingly, the sensing information corresponding to the sensing signal does not need to be generated and fed back.

In some embodiments, in the case where there is no sensing signal that satisfies the quality requirement, the sensing information includes an invalid value, or the sensing information is not transmitted. For example, in the case where the first node does not detect the sensing signal that satisfies the quality requirement, the first node transmits the sensing information including the invalid value to inform a receiver that the sensing signal that satisfies the quality requirement is not detected; or, the first node may not transmit the sensing information, such that the transmission resources are saved. In some embodiments, the invalid value is protocol-specified, for example, the invalid value is 0000.

In some embodiments, the sensing information includes: a measured value of the sensing signal, or a quantitative result of the measured value of the sensing signal, or a domain index in which the measured value of the sensing signal is located. The first node measures the sensing signal to acquire the sensing information. Therefore, the sensing information includes a measured value of the sensing signal (that is, a direct result acquired by measuring the sensing signal), and further includes a quantitative result of the measured value or a domain index in which the measured value is located, such that the number of bits required for the sensing information is further reduced, and the transmission resources required for feedback of the sensing information are saved. Exemplarily, using an example where the first node measures the sensing signal to acquire the distance between the sensing signal and the sensing target, the direct result acquired by the measurement is the distance value, such as 5 m. In some embodiments, the measured value is quantified. For example, in the case where a quantization coefficient is 10, [0, 10 m] is represented by a quantitative result such as 0, (10, 20 m] is represented by a quantitative result such as 1, (20, 30 m] is represented by a quantitative result such as 2, and so on. Then, in the case where the measured distance value is 5 m, a corresponding quantitative result is 0, and the sensing information include the quantitative result "0" of the measured value. In some embodiments, a plurality of domain indexes are set for the measured value. For example, a domain index corresponding to [0, 10 m] is 0, a domain index corresponding to (10, 20 m] is 1, a domain index corresponding to (20, 30 m] is 2, and so on. Then, in the case where the measured distance value is 5 m, the value belongs to the domain [0, 10 m], and the corresponding domain index is 0. The sensing information includes the domain index "0" in which the measured value is located.

In some embodiments, the sensing signal includes at least one of a sound wave, an electromagnetic wave, or a light wave, and the sensing information includes information of a target or an environment directly or indirectly acquired based on the sensing signal. The light wave is a laser, or is a light wave in another form, which is not limited in the present disclosure. The target refers to a sensing target, for example, a pedestrian, a vehicle, or an obstacle, which is determined based on an actual sensing scenario and is not limited in the present disclosure. The environment refers to an environment where the sensing node is located, such as a certain geographical position area, a certain building, or an office, which is not limited in the present disclosure. In the case where the sensing information includes the information of the target, the sensing information includes at least one of the position, the speed, or the distance of the target, which is determined based on an actual sensing requirement and is not limited in the present disclosure. In the case where the sensing information includes the information of the environment, the sensing information includes at least one of the following items: whether an obstacle exists in the environment, whether a detection target exists in the environment, and the position, the speed, and the distance of the detection target in the environment, which is determined based on an actual sensing requirement and is not limited in the present disclosure. Direct acquisition of the sensing information based on the sensing signal means that the sensing signal is measured, and the acquired measured value is directly used as the sensing information. Indirect acquisition of the sensing information based on the sensing signal means that the sensing signal is measured, and the sensing information is further acquired based on the measured value. For example, delay measurement is performed on the sensing signal, and a distance is further acquired based on the measured delay and is determined as the sensing information.

According to the technical solutions provided in the embodiments of the present disclosure, the quality requirement of the sensing signal is constrained, such that the sensing node transmits the sensing information acquired based on the sensing signal that satisfies the quality requirement, and neither process or feed back the sensing signal that does not satisfy the quality requirement. In one aspect, the accuracy and validity of the feedback sensing information is improved by constraining the quality requirement of the sensing signal. In another aspect, the sensing signal that does not satisfy the quality requirement is not processed and fed back, such that the processing complexity and energy consumption of the sensing node are reduced, the feedback amount is reduced, transmission resources are saved, and the transmission efficiency of the sensing information is improved.

In some embodiments, the quality requirement is protocol-specified without a configuration process. The "protocol" in the present disclosure refers to a standard protocol in the communication field including, for example, the LTE protocol, the NR protocol, and related protocols applied in future communication systems, which is not limited in the present disclosure. The "protocol-specified" in the present disclosure refers to the specification in a standard protocol in the above communication field.

In some embodiments, the quality requirement is configured. In this case, the first node receives configuration information, and the configuration information is used to configure the quality requirement. In some embodiments, the configuration information includes above quality requirement, for example, a value range required for one or more quality metrics. In some embodiments, the configuration information further includes any other information that determines the quality requirement, for example, an index value of a value range required for one or more quality metrics.

In some embodiments, the configuration information is configured by the second node receiving the sensing information. In some embodiments, the second node transmits configuration information, and the first node receives the configuration information and determines the quality requirement based on the configuration information. The first node transmits to the second node the sensing information acquired based on the sensing signal that satisfies the quality requirement, and the second node receives the sensing information.

In some embodiments, the configuration information is not configured by the second node receiving the sensing information, for example, configured by a third node in the sensing system. The third node is different from the first node and the second node. In some embodiments, the third node transmits configuration information, and the first node receives the configuration information and determines the quality requirement based on the configuration information. The first node transmits to the second node the sensing information acquired based on the sensing signal that satisfies the quality requirement, and the second node receives the sensing information. In some embodiments, the third node is any one of: an access network device (for example, a base station), a terminal device, a server, a core network element, or the like. In the embodiments of the present disclosure, a specific device that implements the third node is not limited.

In some embodiments, the configuration information is used to configure a constraint of the sensing information. In some embodiments, the constraint includes at least one of the following items: the sensing information is within a valid domain, or the sensing information is acquired based on the sensing signal that satisfies the quality requirement. For descriptions of the valid domain, reference may be made to the following embodiments.

In some embodiments, the constraint is configured individually for different objects. In other words, the constraints are respectively configured for different objects. The above objects include any one or a combination of more of: a sensing service, a sensing task, a sensing target, or a sensing node.

In some embodiments, the configuration information is transmitted in a unicast, multicast, or broadcast manner. In some embodiments, the second node transmits configuration information. In some embodiments, the second node transmits the configuration information in a unicast, multicast, or broadcast manner. Exemplarily, in the case where the second node is a sensing controller node in the sensing system illustrated in FIG. 3, the second node transmits the configuration information to a plurality of sensing nodes in a multicast or broadcast manner.

In some embodiments, in the case where the first node does not receive the configuration information, or the quality requirement is not configured in the configuration information, the first node does not transmit the sensing information, or does not consider a constraint of the quality requirement in transmitting the sensing information. In the case where the first node does not receive the configuration information, or the quality requirement is not configured in the configuration information, whether the first node does not transmit the sensing information or does not consider the constraint of the quality requirement in transmitting the sensing information is protocol-specified. In the case where the first node does not receive the configuration information, or the quality requirement is not configured in the configuration information, the processing procedure performed by the first node is simplified in the case where the first node does not transmit the sensing information, such that the first node avoids performing an unnecessary sensing process and feedback process. In the case where the first node does not receive the configuration information, or the quality requirement is not configured in the configuration information, the first node feeds back all the acquired sensing information in the case where the first node does not consider the constraint of the quality requirement in transmitting the sensing information.

In some embodiments, one or more sensing nodes (for example, the first nodes) feed back the sensing information to the same sensing controller node (for example, the second node), and the one or more sensing nodes perform feedback uniformly based on the configuration information transmitted by the sensing controller node in a multicast or broadcast manner. In some cases, the sensing controller node further serves as a sensing node to transmit or receive a sensing signal. In this case, the sensing controller node uses the same configuration information as the sensing node managed by the sensing controller node to collect sensing information.

In some embodiments, the sensing node (for example, the first node) performs data preprocessing on the received sensing signal during the sensing process to acquire the sensing information. In the process, the sensing node needs to evaluate the sensing signal based on the quality requirement of the sensing signal in the configuration information upon receiving the sensing signal. Based on the priority principle matching the quality requirement, for example, the received signal with the greater energy is prioritized selecting and processing, the first N sensing signals that satisfy the threshold of the energy of the received signal are subjected to data processing to acquire the sensing information carried by the signal, and the remaining received sensing signals are not processed. In the case where two or more evaluation metrics for signal quality are present in the quality requirement configured in the configuration information, the sensing controller node (for example, the second node) needs to configure an metric priority for the sensing service and the sensing target, that is, determine the priority of the sensing signal and the priority of the feedback quantity based on both the metric priority and the priority of the numerical value in the metric. For example, for the positioning based on the received signal quality and the LOS probability, only under a LOS probability, the received signal quality and the distance between the signal transmission point and the reception point satisfy the model defined in the communication system. In this case, the received signals need to first satisfy the LOS probability, and then the received signal qualities are ordered; and the sensing controller node needs to perform corresponding configuration based on the requirement.

The quality requirement is protocol-specified or configured, such that the sensing node considers the constraint of the quality requirement in acquiring and feeding back the sensing information. In this way, the accuracy and validity of the fed-back sensing information are improved, the processing complexity and energy consumption of the sensing node are reduced, the feedback quantity is reduced, the transmission resources are saved, and the transmission efficiency of the sensing information is improved.

In some embodiments, in addition to the constraint on the quality requirement of the sensing information, the sensing information is further constrained by other limiting conditions.

In some embodiments, the sensing information is within a valid domain.

In some embodiments, the sensing information satisfies the following constraints: the sensing information is within a valid domain, and the sensing information is acquired based on the sensing signal that satisfies the quality requirement.

As described above, the first node measures the sensing signal to acquire the sensing information. In feeding back the sensing information, the first node imposes a constraint on the quality requirement of the sensing signal and a constraint on the valid domain of the sensing information. The first node only needs to feed back sensing information within the valid domain. In other words, the first node does not need to feed back sensing information that is not within the valid domain.

In some embodiments, the sensing information transmitted by the first node includes: a numerical value of the sensing information, and/or a statistical result of the numerical value of the sensing information. The numerical value of the sensing information refers to a value of the sensing information acquired through actual measurement. The statistical result of the numerical value of the sensing information may be a result acquired by performing further statistical analysis on the value of the sensing information acquired through actual measurement. Using an example where the numerical value of the sensing information includes a distance, the statistical result of the numerical value of the sensing information may be distribution of the distance, for example, distribution of the distance in several domains, or may be a proportion of a number of distances within a valid range to a total number of measured distances, or the like. A specific form of the statistical result is not limited in the present disclosure.

In some embodiments, the constraint includes a case that the sensing information is acquired based on the sensing signal that satisfies the quality requirement. The first node only feeds back the sensing information acquired based on the sensing signal that satisfies the quality requirement, and neither processes or feeds back the sensing signal that does not satisfy the quality requirement.

In some embodiments, the constraint includes a case that the sensing information is within a valid domain. The first node only feeds back sensing information within the valid domain, and does not feed back sensing information that is not within the valid domain.

In some embodiments, the constraint includes a case that the sensing information is within a valid domain, and the sensing information is acquired based on the sensing signal that satisfies the quality requirement. The first node only feeds back the sensing information that is acquired based on the sensing signal that satisfies the quality requirement and that is within the valid domain, neither processes or feeds back the sensing information that is acquired based on the sensing signal that does not satisfy the quality requirement, and does not feed back the sensing information that is acquired based on the sensing signal that satisfies the quality requirement but that is not within the valid domain.

In some embodiments, the valid domain is a value range or a set of one or more values.

In some embodiments, the valid domain includes a valid range of at least one parameter related to the sensing information. In some embodiments, the at least one parameter includes at least one of: a distance, a delay, a strength, an amplitude, an angle, an orientation, a speed, a frequency shift, a phase, a frequency, or a period. The distance may refer to a distance between the first node and the sensing target. The delay may refer to a transmission and reception delay of the sensing signal, that is, a difference between a transmission time of the sensing signal and a reception time of the sensing signal, or may be referred to as an arrival delay of the sensing signal (or referred to as an arrival time difference of the sensing signal). The time may refer to the arrival time difference of the sensing signal described above, or may be referred to as a relative time difference, a round trip time, or the like of the sensing signal, that is, a difference between the transmission time of the sensing signal and the reception time of the sensing signal. The strength may refer to a strength of the sensing signal, such as a strength of the sensing signal received by the first node. The strength of the sensing signal may be represented by at least one of the received quality, the received energy, or the LOS probability. The amplitude may refer to an amplitude of the sensing signal, such as an amplitude of the sensing signal received by the first node. The angle may refer to an angle of arrival of the sensing signal, such as an angle of arrival of the sensing signal received by the first node. The orientation may refer to an orientation of the sensing signal, and the orientation may be represented by the angle of arrival of the sensing signal described above or a plurality of orientations specified in advance (such as east, south, west, or north). The speed may refer to a speed of the sensing target, or a relative speed between the first node and the sensing target. The frequency shift may refer to a frequency shift of the sensing signal, such as a frequency shift between the sensing signal received by the first node and the sensing signal transmitted by the first node. The phase may refer to a phase of the sensing signal, such as a phase of the sensing signal received by the first node. The frequency may refer to a frequency of the sensing signal, such as a frequency of the sensing signal received by the first node. The period may refer to a period of the sensing signal, such as a period of the sensing signal received by the first node. In addition, the parameters illustrated herein are only exemplary, which are not limited in the present disclosure.

In some embodiments, the first node acquires one or more pieces of sensing information based on the received sensing signal. In the case where the valid domain includes a valid range of one of the parameters, the first node evaluates whether the parameter corresponding to each piece of sensing information is within the valid range. In the case where the parameter corresponding to the each piece of sensing information is within the valid range, the each piece of sensing information is fed back. In the case where the parameter corresponding to the each piece of sensing information is not within the valid range, the each piece of sensing information is not fed back. Through the process, the first node determines, from one or more pieces of acquired sensing information, one or more pieces of sensing information that need to be fed back and one or more pieces of sensing information that do not need to be fed back. In the case where at least one piece of sensing information needs to be fed back, the first node transmits the at least one piece of sensing information that needs to be fed back.

Exemplarily, in the case where the valid domain only includes the valid range of the distance, assuming that the valid range of the distance is [20 m, 200 m], the first node acquires the following two pieces of sensing information based on the received sensing signal. The first piece of sensing information includes a case that the distance from the sensing signal to the sensing target is 5 m, and the second piece of sensing information includes a case that the distance from the sensing signal to the sensing target is 50 m. Since the distance 5 m corresponding to the first piece of sensing information is not within the valid range [20 m, 200 m], and the distance 50 m corresponding to the second piece of sensing information is within the valid range [20 m, 200 m], the sensing information transmitted by the first node includes the second piece of sensing information, and the first piece of sensing information is not fed back.

In some embodiments, the first node acquires one or more pieces of sensing information based on the received sensing signal. In the case where the valid domain includes the valid ranges of at least two of the parameters, the first node evaluates whether the at least two parameters corresponding to each piece of sensing information are respectively within the valid ranges. In the case where the at least two parameters corresponding to the each piece of sensing information are within the valid range, the sensing information is fed back. In the case where at least one of the at least two parameters corresponding to the each piece of sensing information is not within a corresponding valid range, the piece of sensing information is not fed back. Through the process, the first node determines, from one or more pieces of acquired sensing information, one or more pieces of sensing information that need to be fed back and one or more pieces of sensing information that do not need to be fed back. In the case where at least one piece of sensing information needs to be fed back, the first node transmits the at least one piece of sensing information that needs to be fed back.

Exemplarily, in the case where the valid domain includes the valid range of the distance and the valid range of the speed, the valid range of the distance is [20 m, 200 m], and the valid range of the speed is [5 km/h, 7 km/h], the first node acquires the following three pieces of sensing information based on the received sensing signal. The first piece of sensing information includes a case that the distance from the sensing signal to the sensing target is 5 m and the speed of the sensing target is 0 km/h; the second piece of sensing information includes a case that the distance from the sensing signal to the sensing target is 50 m and the speed of the sensing target is 5 km/h; the third piece of sensing information includes a case that the distance from the sensing signal to the sensing target is 50 m and the speed of the sensing target is 10 km/h. Since the distance 5 m corresponding to the first piece of sensing information is not within the valid range [20 m, 200 m], and the speed 0 km/h is not within the valid range [5 km/h, 7 km/h], the first piece of sensing information is not fed back. Since the distance 50 m corresponding to the second piece of sensing information is within the valid range [20 m, 200 m], and the speed 5 km/h is within the valid range [5 km/h, 7 km/h], the second piece of sensing information needs to be fed back. Since the distance 50 m corresponding to the third piece of sensing information is within the valid range [20 m, 200 m], but the speed 10 km/h is not within the valid range [5 km/h, 7 km/h], the third piece of sensing information is not fed back. The sensing information transmitted by the first node includes the second piece of sensing information, but the first piece of sensing information and the third piece of sensing information are not fed back.

In some embodiments, for the valid range of any one of the parameters, the valid range of the parameter includes one or more value ranges. The value range may be a value range between two threshold values, for example, greater than the first threshold value and less than the second threshold value. The value range may also be greater than or less than a threshold value, or may be a set of one or more values. For example, for the distance, the valid range of the distance may be a value range of [20 m, 200 m], a value range of less than or equal to 200 m, or a value set of { 100 m, 200 m}.

According to the method, the quality requirement of the sensing signal is constrained, and the valid domain of the sensing information is also constrained, such that the feedback quantity is further reduced.

In some embodiments, in the case where the number of sensing signals that satisfy a first condition is greater than an upper limit value N, the sensing information is acquired based on N sensing signals that satisfy the first condition and are selected according to a priority principle. N is a positive integer.

In some embodiments, in the case where the number of sensing signals that satisfy the first condition is less than or equal to the upper limit value N, the first node performs normal feedback based on the sensing information acquired from the sensing signals that satisfy the first condition. The sensing information corresponding to other sensing signals that do not satisfy the first condition is not fed back, or an invalid value is fed back for the sensing information, which is protocol-specified. For example, the first node feeds back sensing information acquired based on the first N sensing signals that satisfy the quality requirement, and in the case where only K sensing signals satisfy the quality requirement and K is less than N, the sensing information corresponding to the (K+1)-th to N-th sensing signals is not fed back, or invalid values are fed back. In particular, in the case where none of the sensing signals received by the first node satisfies the quality requirement, that is, K is equal to 0, the first node does not feed back the information, or feeds back all invalid values, which is protocol-specified.

In some embodiments, the first condition includes a case that the sensing signal satisfies the quality requirement. In some embodiments, the first condition includes a case that the sensing information acquired based on the sensing signal is within the valid domain. In some embodiments, the first condition includes a case that the sensing information acquired based on the sensing signal is within the valid domain, and the sensing signal satisfies the quality requirement.

In some embodiments, the upper limit value N is protocol-specified or configured based on configuration information. By limiting the upper limit value of the number of sensing signals, an excessive feedback quantity of sensing information is avoided.

In some embodiments, in the case where a plurality of sensing signals are at the same priority in the case where the N sensing signals that satisfy the first condition are selected based on the priority principle, at least one sensing signal is randomly selected from the plurality of sensing signals, such that the number of the finally selected sensing signals satisfies the limitation requirement of the upper limit value N.

In some embodiments, the priority principle is determined based on at least one of: the reliability of the sensing signal, the received quality of the sensing signal, the received energy of the sensing signal, the LOS probability of the sensing signal, or the deviation of a metric of the sensing signal and from the central value.

In some embodiments, the priority of the sensing signal is determined based on one of above pieces of information, such as the received energy. The signal with the greater received energy has the higher priority. The first node orders the received sensing signals in a descending order of received energy. In the case where the number of sensing signals that satisfy the first condition in the sequence is greater than the upper limit value N, the first N sensing signals that satisfy the first condition in the sequence are selected, and the sensing information is acquired based on the selected sensing signals. In the case where the number of sensing signals that satisfy the first condition in the sequence is less than or equal to the upper limit value N, the sensing signals that satisfy the first condition in the sequence are selected, and the sensing information is acquired based on the selected sensing signals.

In some embodiments, the priority of the sensing signal is determined based on at least two types of above information such as the received quality and the LOS probability. For example, the priority value is calculated based on the received quality and the LOS probability based on a predefined algorithm. Assuming that the signal with the greater priority value has the higher priority, then the first node calculates priority values of the received sensing signals, and orders the received sensing signals in a descending order of the priority values. Assuming that the signal with the lower priority value has the higher priority, then the first node calculates priority values for the received sensing signals, and orders the received sensing signals in an ascending order of the priority values. In the case where the number of sensing signals that satisfy the first condition in the sequence is greater than the upper limit value N, the first N sensing signals that satisfy the first condition in the sequence are selected, and the sensing information is acquired based on the selected sensing signals. In the case where the number of sensing signals that satisfy the first condition in the sequence is less than or equal to the upper limit value N, the sensing signals that satisfy the first condition in the sequence are selected, and the sensing information is acquired based on the selected sensing signals.

In the case where the number of sensing signals that satisfy the first condition is greater than the upper limit value N, the first node selects N sensing signals from the sensing signals that satisfy the first condition based on the above priority principle, and feeds back the sensing information acquired based on the N sensing signals, such that an excessive feedback quantity of the sensing information is avoided, and the accuracy of the fed-back sensing information is improved.

FIG. 6 illustrates a flowchart of a method for receiving sensing information according to some embodiments of the present disclosure. The method includes the S610.

In S610, a second node receives sensing information, wherein the sensing information is acquired based on a sensing signal that satisfies a quality requirement.

In some embodiments, the second node receives sensing information from a first node. The sensing information is acquired based on a sensing signal that satisfies a quality requirement.

In some embodiments, the second node transmits the configuration information. The configuration information is used to configure the quality requirement. In some embodiments, the second node transmits the configuration information in a broadcast, multicast, or unicast manner.

In some embodiments, the second node transmits configuration information, and the first node receives the configuration information and determines the quality requirement based on the configuration information. The first node measures the sensing signal, and acquires the sensing information based on the sensing signal that satisfies the quality requirement. The first node transmits the sensing information to the second node, and the second node receives the sensing information.

In some embodiments, the configuration information is used to configure a constraint of the sensing information. In some embodiments, the constraint includes at least one of the following items: the sensing information is within a valid domain, or the sensing information is acquired based on the sensing signal that satisfies the quality requirement. The first node receives the configuration information, and determines the constraint based on the configuration information. The first node transmits the sensing information that satisfies the constraint to the second node, and the second node receives the sensing information that satisfies the constraint.

For details that are not specified in the embodiments, reference may be made to the embodiments described above, and the details will not be repeated herein.

It should be noted that the above process performed by the first node may be implemented separately as the method for transmitting sensing information performed by the first node. The above process performed by the second node may be implemented separately as the method for receiving sensing information performed by the second node.

The following embodiments are apparatus embodiments of the present disclosure that are used to implement the method embodiments of the present disclosure. For details that are not disclosed in the apparatus embodiments of the present disclosure, reference may be made to the method embodiments of the present disclosure.

FIG. 7 illustrates a block diagram of an apparatus for transmitting sensing information according to some embodiments of the present disclosure. The apparatus has functions for implementing the method embodiments implemented by the first node, and the functions may be implemented by hardware, or by hardware executing corresponding software. The apparatus may be the first node described above, or may be disposed in the first node. As illustrated in FIG. 7, the apparatus 700 include: a transmitting module 710.

The transmitting module 710 is configured to transmit sensing information, wherein the sensing information is acquired based on a sensing signal that satisfies a quality requirement.

In some embodiments, the quality requirement is determined based on at least one of: a received quality of the sensing signal, a received energy of the sensing signal, or a line-of-sight probability of the sensing signal.

In some embodiments, the quality requirement comprises requirements for one or a plurality of quality metrics.

In some embodiments, in a case where the quality requirement comprises requirements for the plurality of quality metrics, a requirement for each of the plurality of quality metrics is individually constrained; or requirements for at least two of the plurality of quality metrics are jointly constrained.

In some embodiments, the apparatus 700 further includes a receiving module 720, configured to receive configuration information, wherein the configuration information is used to configure the quality requirement.

In some embodiments, the configuration information is configured by a second node receiving the sensing information.

In some embodiments, in a case where the first node does not receive the configuration information or the quality requirement is not configured in the configuration information, the first node does not transmit the sensing information, or does not consider a constraint of the quality requirement in transmitting the sensing information.

In some embodiments, the quality requirement is configured individually for different objects, and the objects comprise any one or a combination of more of: a sensing service, a sensing task, a sensing target, or a sensing node.

In some embodiments, the apparatus 700 further includes a receiving module 720 and a processing module 730, wherein

the receiving module 720 is configured to receive sensing signals; and
the processing module 730 is configured to acquire the sensing information by processing the sensing signal that satisfies the quality requirement.

In some embodiments, the processing module 730 is configured to perform quality evaluation on the sensing signal to acquire the sensing information.

In some embodiments, the first node neither processes or feeds back a sensing signal that does not satisfy the quality requirement.

In some embodiments, the sensing information is within a valid domain.

In some embodiments, the valid domain comprises a valid range of at least one of following parameters related to the sensing information: a distance, a delay, a strength, an amplitude, an angle, an orientation, a speed, a frequency shift, a phase, a frequency, or a period.

In some embodiments, in a case where a number of sensing signals that satisfy a first condition is greater than an upper limit value N, the sensing information is acquired based on N sensing signals that satisfy the first condition, wherein N is a positive integer, the N sensing signals that satisfy the first condition are selected based on a priority principle, and the first condition comprises a case that the sensing signal satisfies the quality requirement.

In some embodiments, the priority principle is determined based on at least one of: a reliability of the sensing signal, a received quality of the sensing signal, a received energy of the sensing signal, a line-of-sight probability of the sensing signal, or a deviation of a metric of the sensing signal from a central value.

In some embodiments, in a case where there is no sensing signal that satisfies the quality requirement, the sensing information includes an invalid value, or the sensing information is not transmitted.

In some embodiments, the sensing signal comprises at least one of a sound wave, an electromagnetic wave, or a light wave, and the sensing information comprises information of a target or an environment directly or indirectly acquired based on the sensing signal.

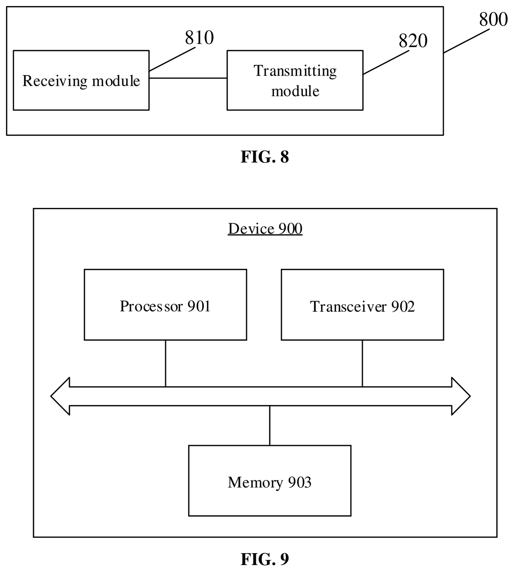

FIG. 8 illustrates a block diagram of an apparatus for transmitting sensing information according to some embodiments of the present disclosure. The apparatus has functions for implementing the method embodiments implemented by the second node, and the functions may be implemented by hardware, or by hardware executing corresponding software. The apparatus may be the second node described above, or may be disposed in the second node. As illustrated in FIG. 8, the apparatus 800 include: a receiving module 810.

The receiving module 810 is configured to receive sensing information, wherein the sensing information is acquired based on a sensing signal that satisfies a quality requirement.

In some embodiments, the quality requirement is determined based on at least one of: a received quality of the sensing signal, a received energy of the sensing signal, or a line-of-sight probability of the sensing signal.

In some embodiments, the quality requirement comprises requirements for one or a plurality of quality metrics.

In some embodiments, in a case where the quality requirement comprises requirements for the plurality of quality metrics, a requirement for each of the plurality of quality metrics is individually constrained; or requirements for at least two of the plurality of quality metrics are jointly constrained.

In some embodiments, the apparatus 800 further includes a transmitting module 820, configured to transmit configuration information, wherein the configuration information is used to configure the quality requirement.

In some embodiments, the configuration information is transmitted in a multicast or broadcast manner.

In some embodiments, the quality requirement is configured individually for different objects, and the objects comprise any one or a combination of more of: a sensing service, a sensing target, or a sensing node.

In some embodiments, the sensing information satisfies following constraints:

the sensing information is within a valid domain; and the sensing information is acquired based on the sensing signal that satisfies the quality requirement.

In some embodiments, the valid domain comprises a valid range of at least one of following parameters related to the sensing information: a distance, a delay, a strength, an amplitude, an angle, an orientation, a speed, a frequency shift, a phase, a frequency, or a period.

In some embodiments, in a case where a number of sensing signals that satisfy a first condition is greater than an upper limit value N, the sensing information is acquired based on N sensing signals that satisfy the first condition, wherein N is a positive integer, the N sensing signals that satisfy the first condition are selected based on a priority principle, and the first condition comprises a case that the sensing signal satisfies the quality requirement.

In some embodiments, the priority principle is determined based on at least one of: a reliability of the sensing signal, a received quality of the sensing signal, a received energy of the sensing signal, a line-of-sight probability of the sensing signal, or a deviation of a metric of the sensing signal from a central value.

In some embodiments, in a case where there is no sensing signal that satisfies the quality requirement, the sensing information comprises an invalid value, or the sensing information is not transmitted.

In some embodiments, the sensing signal comprises at least one of a sound wave, an electromagnetic wave, or a light wave, and the sensing information comprises information of a target or an environment directly or indirectly acquired based on the sensing signal.

It should be noted that in the case where the apparatus according to the above embodiments implements its functions, the division of the functional modules is only for illustrative purposes. In practice, the functions may be distributed to different functional modules based on actual needs, that is, the internal structure of the apparatus may be divided into different functional modules to complete all or part of the functions described above.

Regarding the apparatus in the above embodiments, the specific way in which each module performs operations has been described in detail in the relevant method embodiments, and is not described any further.

FIG. 9 illustrates a schematic structural diagram of a device 900 according to some embodiments of the present disclosure. The device 900 may be configured to perform the method processes in the above embodiments. The device 900 may be a device such as an access network device (for example, a base station), a terminal device, a server, a core network element, or a sensing information collector. The terminal device 900 may include: a processor 901, a transceiver 902, and a memory 903. The processor 901 is configured to achieve the functions of the processing module, and the transceiver 902 is configured to achieve the functions of the receiving module and/or the transmitting module described above.

The processor 901 may include one or more processing cores, and the processor 901 executes various functional applications and performs information processing by running software programs and modules.

The transceiver 902 may include a receiver and a transmitter, which are practiced, for example, as the same wireless communication assembly that includes a wireless communication chip and a radio frequency antenna.

The memory 903 may be connected to the processor 901 and the transceiver 902.

The memory 903 may be configured to store one or more computer programs loaded and run by the processor, and the processor 901 is configured to load and run the one or more computer programs to perform the processes in the above method.

In addition, the memory 903 may be implemented by any type or combination of volatile or nonvolatile storage devices including, but not limited to: magnetic or optical disks, electrically erasable programmable read-only memories, erasable programmable read-only memories, static random access memories, read-only memories, magnetic memories, flash memories, and programmable read-only memories.

In some embodiments, in the case where the device 900 is practiced as a first node, the transceiver 902 is configured to transmit sensing information, wherein the sensing information is acquired based on a sensing signal that satisfies a quality requirement.

In some embodiments, in the case where the device 900 is practiced as a second node, the transceiver 902 is configured to receive sensing information, wherein the sensing information is acquired based on a sensing signal that satisfies a quality requirement.

For details that are not specified in the above embodiments, reference may be made to the description in the above method embodiments, and the details will not be repeated herein.

Some embodiments of the present disclosure further provide a computer-readable storage medium storing one or more computer programs therein. The one or more computer programs, when loaded and run by a processor of a first node, cause the first node to perform the method for transmitting sensing information described above.

Some embodiments of the present disclosure further provide a computer-readable storage medium storing one or more computer programs therein. The one or more computer programs, when loaded and run by a processor of a second node, cause the second node to perform the method for receiving sensing information described above.

In some embodiments, the computer-readable storage medium includes: a read-only memory (ROM), a random-access memory (RAM), a solid state drive (SSD), an optical disk, or the like. The RAM includes a resistance random-access memory (ReRAM) and a dynamic random-access memory (DRAM).

Some embodiments of the present disclosure further provide a chip including one or more programmable logic circuits and/or one or more program instructions. The chip, when running, is configured to perform the method for transmitting sensing information described above.

Some embodiments of the present disclosure further provide a chip including one or more programmable logic circuits and/or one or more program instructions. The chip, when running, is configured to perform the method for receiving sensing information described above.

Some embodiments of the present disclosure further provide a computer program product including one or more computer programs stored in a computer-readable storage medium. The one or more computer programs, when read from the computer-readable storage medium, and loaded and run by a processor of a first node, cause the processor to perform the method for transmitting sensing information described above.

Some embodiments of the present disclosure further provide a computer program product including one or more computer programs stored in a computer-readable storage medium. The one or more computer programs, when read from the computer-readable storage medium, and loaded and run by a processor of a second node, cause the processor to perform the method for receiving sensing information described above.

It should be understood that the "indication" in the embodiments of the present disclosure may be a direct indication, an indirect indication, or an indication that there is an association relationship. For example, "A indicates B" may mean that A indicates B directly, e.g., B may be acquired through A; or that A indicates B indirectly, e.g., A indicates C through which B may be acquired; or that an association relationship is present between A and B.

In the description of the embodiments of the present disclosure, the term "correspond" indicates a direct or indirect corresponding relationship between two items, or indicates an association relationship between the two items. It may also indicate relationships such as indicating and being indicated, and configuring and being configured.

The term "a plurality of" herein means two or more. The term "and/or" describes the association relationship between the associated objects and indicates that three relationships may be present. For example, A and/or B may indicate (A), (A and B), and (B). The symbol "/" generally indicates an "or" relationship between the associated objects.

In addition, serial numbers of the processes described herein only show an exemplary possible execution sequence. In some embodiments, the processes may be not performed in the numbering sequence, for example, two processes with different serial numbers are performed simultaneously, or two processes with different serial numbers are performed in a reverse order to the illustrated sequence, which is not limited in the present disclosure.

Those skilled in the art should understood that in the one or more embodiments described above, the functions described in the embodiments of the present disclosure may be achieved using hardware, software, firmware, or any combination thereof. The functions, when achieved using software, are stored in a computer-readable medium or transmitted as one or more instructions or codes on the computer-readable medium. The computer-readable medium includes a computer storage medium and a communication medium. The communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for transmitting sensing information, performed by a first node, the method comprising:
transmitting sensing information, wherein the sensing information is acquired based on a sensing signal that satisfies a quality requirement.

2. The method according to claim 1, wherein the quality requirement is determined based on at least one of: a received quality of the sensing signal, a received energy of the sensing signal, or a line-of-sight probability of the sensing signal.

3. The method according to claim 1 or 2, wherein the quality requirement comprises requirements for one or a plurality of quality metrics.

4. The method according to claim 3, wherein in a case where the quality requirement comprises requirements for the plurality of quality metrics,

a requirement for each of the plurality of quality metrics is individually constrained; or
requirements for at least two of the plurality of quality metrics are jointly constrained.

5. The method according to any one of claims 1 to 4, further comprising:
receiving configuration information, wherein the configuration information is used to configure the quality requirement.

6. The method according to claim 5, wherein the configuration information is configured by a second node receiving the sensing information.

7. The method according to claim 5 or 6, wherein receiving the configuration information comprises:
receiving the configuration information broadcast or multicast by a second node.

8. The method according to any one of claims 5 to 7, wherein in a case where the first node does not receive the configuration information or the quality requirement is not configured in the configuration information, the first node does not transmit the sensing information, or does not consider a constraint of the quality requirement in transmitting the sensing information.

9. The method according to any one of claims 1 to 8, wherein the quality requirement is configured individually for different objects, and the objects comprise any one or a combination of more of: a sensing service, a sensing task, a sensing target, or a sensing node.

10. The method according to any one of claims 1 to 9, wherein prior to transmitting the sensing information, the method further comprises:

receiving sensing signals; and
acquiring the sensing information by processing the sensing signal that satisfies the quality requirement.

11. The method according to claim 10, wherein the first node does not process and feed back a sensing signal that does not satisfy the quality requirement.

12. The method according to any one of claims 1 to 11, wherein the sensing information is within a valid domain.

13. The method according to claim 12, wherein the valid domain comprises a valid range of at least one of following parameters related to the sensing information: a distance, a delay, a strength, an amplitude, an angle, an orientation, a speed, a frequency shift, a phase, a frequency, or a period.

14. The method according to any one of claims 1 to 13, wherein in a case where a number of sensing signals that satisfy a first condition is greater than an upper limit value N, the sensing information is acquired based on N sensing signals that satisfy the first condition, wherein N is a positive integer, the N sensing signals that satisfy the first condition are selected based on a priority principle, and the first condition comprises a case that the sensing signal satisfies the quality requirement.

15. The method according to claim 14, wherein the priority principle is determined based on at least one of: a reliability of the sensing signal, a received quality of the sensing signal, a received energy of the sensing signal, a line-of-sight probability of the sensing signal, or a deviation of a metric of the sensing signal from a central value.

16. The method according to any one of claims 1 to 15, wherein in a case where there is no sensing signal that satisfies the quality requirement, the sensing information comprises an invalid value, or the sensing information is not transmitted.

17. The method according to any one of claims 1 to 16, wherein the sensing signal comprises at least one of a sound wave, an electromagnetic wave, or a light wave, and the sensing information comprises information of a target or an environment directly or indirectly acquired based on the sensing signal.

18. A method for receiving sensing information, performed by a second node, the method comprising: receiving sensing information, wherein the sensing information is acquired based on a sensing signal that satisfies a quality requirement.

19. The method according to claim 18, wherein the quality requirement is determined based on at least one of: a received quality of the sensing signal, a received energy of the sensing signal, or a line-of-sight probability of the sensing signal.

20. The method according to claim 18 or 19, wherein the quality requirement comprises requirements for one or a plurality of quality metrics.

21. The method according to claim 20, wherein in a case where the quality requirement comprises requirements for the plurality of quality metrics,

a requirement for each of the plurality of quality metrics is individually constrained; or requirements for at least two of the plurality of quality metrics are jointly constrained.

22. The method according to any one of claims 18 to 21, further comprising: transmitting configuration information, wherein the configuration information is used to configure the quality requirement.

23. The method according to claim 22, wherein the configuration information is transmitted in a multicast or broadcast manner.

24. The method according to any one of claims 18 to 23, wherein the quality requirement is configured individually for different objects, and the objects comprise any one or a combination of more of: a sensing service, a sensing target, or a sensing node.

25. The method according to any one of claims 18 to 24, wherein the sensing information satisfies following constraints:

the sensing information is within a valid domain; and
the sensing information is acquired based on the sensing signal that satisfies the quality requirement.

26. The method according to claim 25, wherein the valid domain comprises a valid range of at least one of following parameters related to the sensing information: a distance, a delay, a strength, an amplitude, an angle, an orientation, a speed, a frequency shift, a phase, a frequency, or a period.

27. The method according to any one of claims 18 to 26, wherein in a case where a number of sensing signals that satisfy a first condition is greater than an upper limit value N, the sensing information is acquired based on N sensing signals that satisfy the first condition, wherein N is a positive integer, the N sensing signals that satisfy the first condition are selected based on a priority principle, and the first condition comprises a case that the sensing signal satisfies the quality requirement.

28. The method according to claim 27, wherein the priority principle is determined based on at least one of: a reliability of the sensing signal, a received quality of the sensing signal, a received energy of the sensing signal, a line-of-sight probability of the sensing signal, or a deviation of a metric of the sensing signal from a central value.

29. The method according to any one of claims 18 to 28, wherein in a case where there is no sensing signal that satisfies the quality requirement, the sensing information comprises an invalid value, or the sensing information is not transmitted.

30. The method according to any one of claims 18 to 29, wherein the sensing signal comprises at least one of a sound wave, an electromagnetic wave, or a light wave, and the sensing information comprises information of a target or an environment directly or indirectly acquired based on the sensing signal.

31. An apparatus for transmitting sensing information, comprising: a transmitting module, configured to transmit sensing information, wherein the sensing information is acquired based on a sensing signal that satisfies a quality requirement.

32. An apparatus for receiving sensing information, comprising:

a receiving module, configured to receive sensing information, wherein the sensing information is acquired based on a sensing signal that satisfies a quality requirement.

33. A device, comprising: a processor and a memory storing one or more computer programs therein, wherein the processor is configured to load and run the one or more computer programs to cause the device to perform the method as defined in any one of claims 1 to 17 or the method as defined in any one of claims 18 to 30.

34. A computer-readable storage medium, storing one or more computer programs therein, wherein the one or more computer programs, when loaded and run by a processor, cause the processor to perform the method as defined in any one of claims 1 to 17 or the method as defined in any one of claims 18 to 30.

35. A chip, comprising programmable logic circuitry and/or one or more program instructions, wherein the chip, when running, is configured to perform the method as defined in any one of claims 1 to 17 or the method as defined in any one of claims 18 to 30.

36. A computer program product, comprising: one or more computer programs stored in a computer-readable storage medium, wherein the one or more computer programs, when read from the computer-readable storage medium, and loaded and run by a processor, cause the processor to perform the method as defined in any one of claims 1 to 17 or the method as defined in any one of claims 18 to 30.

**FIG. 1**

| Mode 1: base station self-transmitting and self-receiving sensing | Mode 2: terminal self-transmitting and self-receiving sensing |
|---|---|
| Base station — Sensing signal → / ← Echo signal — Sensing target | Terminal — Sensing signal → / ← Echo signal — Sensing target |
| Mode 3: station-cooperative sensing | Mode 4: terminal-cooperative sensing |
| Base station A / Base station B; Sensing signal / Echo signal; Sensing target | Terminal A / Terminal B; Sensing signal / Echo signal; Sensing target |
| Mode 5: base station-terminal-cooperative sensing | Mode 6: terminal-base station-cooperative sensing |
| Base station / Terminal; Sensing signal / Echo signal; Sensing target | Terminal / Base station; Sensing signal / Echo signal; Sensing target |
| Mode 6: terminal-base station-cooperative sensing | Mode 8: sensing target as sensing signal receiver node |
| Sensing signal transmitter node (sensing target) — Sensing signal → Sensing signal receiver node | Sensing signal transmitter node — Sensing signal → / ← Echo signal — Sensing signal receiver node (sensing target) |

**FIG. 2**

31

Communication signal

Communication signal

Sensing node 3

Sensing target

Sensing signal

Sensing signal

Sensing node 1

Sensing node 2

or

**FIG. 3**

410

Transmitting, by a first node, sensing information, wherein the sensing information is acquired based on a sensing signal that satisfies a quality requirement

**FIG. 4**

**FIG. 5**

Receiving, by a second node, sensing information, wherein the sensing information is acquired based on a sensing signal that satisfies a quality requirement

610

**FIG. 6**

**FIG. 7**

800

810

820

| Receiving module | Transmitting module |

**FIG. 8**

Device 900

| Processor 901 | Transceiver 902 |

Memory 903

**FIG. 9**

## INTERNATIONAL SEARCH REPORT

| International application No. |
|---|
| **PCT/CN2023/107096** |

| **A.** | **CLASSIFICATION OF SUBJECT MATTER** |
|---|---|
| | H04L5/00(2006.01)i |

According to International Patent Classification (IPC) or to both national classification and IPC

| **B.** | **FIELDS SEARCHED** |
|---|---|

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 感知, 感测, 通感, 满足, 质量, 需求, 要求, sens+, meet, quality, demand, requirement

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 115604728 A (VIVO COMMUNICATION TECHNOLOGY CO., LTD.) 13 January 2023 (2023-01-13) <br> description, paragraphs 221-276 | 1-36 |
| A | CN 113726491 A (CHINA ACADEMY OF INFORMATION AND COMMUNICATIONS TECHNOLOGY) 30 November 2021 (2021-11-30) <br> entire document | 1-36 |
| A | CN 116347464 A (VIVO COMMUNICATION TECHNOLOGY CO., LTD.) 27 June 2023 (2023-06-27) <br> entire document | 1-36 |
| A | US 2020230416 A1 (CASE WESTERN RESERVE UNIVERSITY et al.) 23 July 2020 (2020-07-23) <br> entire document | 1-36 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 March 2024** | **20 March 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107096**

| Patent document cited in search report | | | Publication date (day/month/year) | Patent family member(s) | | | Publication date (day/month/year) |
|---|---|---|---|---|---|---|---|
| CN | 115604728 | A | 13 January 2023 | WO | 2023274029 | A1 | 05 January 2023 |
| CN | 113726491 | A | 30 November 2021 | | None | | |
| CN | 116347464 | A | 27 June 2023 | WO | 2023116756 | A1 | 29 June 2023 |
| US | 2020230416 | A1 | 23 July 2020 | WO | 2018071494 | A1 | 19 April 2018 |
| | | | | EP | 3525876 | A1 | 21 August 2019 |
| | | | | US | 2022001183 | A1 | 06 January 2022 |

Form PCT/ISA/210 (patent family annex) (July 2022)